# EUROPEAN PATENT SPECIFICATION

(11) **EP 1 327 177 B1**
(45) Date of publication and mention of the grant of the patent: **11.08.2004**
(21) Application number: 01976304.4
(22) Date of filing: 11.10.2001
(51) Int. Cl.: G02C 7/04, G02C 7/02

(54) **CONTACT LENS WITH ENCAPSULATED LIGHT-REFLECTIVE PARTICLES**
KONTAKTLINSE MIT EINGEKAPSELTEN UND LICHT REFLEKTIERENDEN PARTIKELN
LENTILLE DE CONTACT CONTENANT DES PARTICULES REFLECHISSANTES ENCAPSULEES

(30) Priority: 13.10.2000 US 240380 P
(43) Date of publication of application: 16.07.2003
(73) Proprietor: Novartis AG, 4056 Basel (CH); Novartis Pharma GmbH, 1230 Wien (AT)
(72) Inventor: NICULAS, Cornelius, Daniel, Suwanee, GA 30024 (US); MANLEY, Nancy, Kathryn, Stone Mountain, GA 30087 (US); MALONE, Norman, Kim, Lilburn, GA 30047 (US); KARTOVICKY, Thomas, James, Alpharetta, GA 30005 (US); LYNCH, Christopher, Suwanee, GA 30024 (US)
(74) Representative: Gros, Florent
(86) International application number: PCT/EP2001/011800
(87) International publication number: WO 2002/031585

(56) References cited:
- EP-A- 0 127 450
- EP-A- 0 384 632
- WO-A-00/52516
- US-A- 4 669 834
- US-A- 4 702 574

## Description

### Background of the invention

### Field of invention

The present invention relates generally to optical lenses, and more particularly to a contact lens with encapsulated light-reflective pigment particles providing the lens with a sparkle or glitter effect.

### Description of related prior art

Optical contact lenses are commonly utilized for vision correction and/or for cosmetic effect such as, for example, to change the apparent eye color of a wearer. Novelty lenses are also known for creating the appearance of a "cat-eye" or other unnatural pupil shape.

Various types of contact lenses are available, including hard lenses, soft lenses, and extended-wear lenses. Lenses are typically manufactured by casting, molding, or other known fabrication methods, and may be finished by lathing, polishing or other machining methods. Lenses are typically formed from polymeric materials such as, for example, polymerized hydroxyethylmethacrylate (HEMA), or polysiloxanes.

It has been found desirable to provide a contact lens having an improved cosmetic effect relative to previously known lenses. Cosmetic contact lenses are described for instance in US patent application number US-A-4 702 574 and in European patent application number EP-A-0 127 450. It is to the provision of a contact lens and method of manufacture meeting this and other needs that the present invention is primarily directed.

### Summary of the invention

The present invention provides a contact lens having an improved cosmetic effect relative to previously known lenses, and a method of forming such lenses. The lens of the present invention preferably produces a sparkle or glitter effect in the eye of the wearer, which effect is Visually perceptible by an ordinary observer within typical conversational distance of the wearer. Single-color or multi-color sparkle effects can be produced. The lens can provide vision correction, or can be solely cosmetic.

In one aspect, the invention is a contact lens comprising a body having a base surface and a front surface, the contact lens further comprising at least one light-reflective particle encapsulated within said body and having a surface area sufficient to create a visually perceptible glitter effect.

In another aspect, the invention is a method of forming a contact lens. The method comprises the steps of applying at least one light-reflective particle to a lens base, wherein the at least one light-reflective particle has a surface area sufficient to create a visually perceptible glitter effect, and encapsulating the at least one light-reflective particle between the lens base and a layer of cover material.

In another aspect, the invention is a contact lens comprising a lens base; a plurality of light-reflective particles applied to a front face of the lens base, each of said plurality of light-reflective particles having a surface with a dimension of at least about 100 microns and preferably at least about 120 microns; and a layer of cover material overlying the plurality of light-reflective particles to thereby encapsulate said plurality of light-reflective particles between the lens base and the layer of cover material.

These and other features and advantages of the present invention are described herein with reference to example embodiments shown in the appended drawing figures.

### Brief description of the drawing figures

Figure 1 is a side cross-sectional view of a contact lens according to a preferred form of the present invention.
Figure 2 is a top view of the contact lens of Fig. 1 according to a preferred form of the present invention.
Figures 3a-3c show side views of three stages in the manufacture of a lens according to a preferred form of the present invention.

### Detailed description

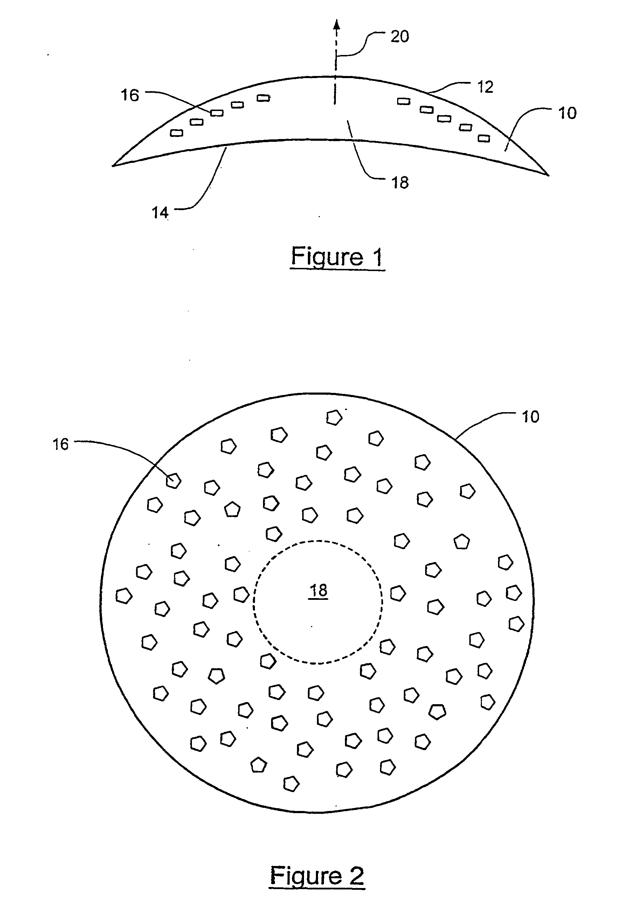

Referring now to the drawing figures, wherein like reference numerals represent like parts throughout, preferred forms of the present invention will now be described. Figures 1 and 2 show a contact lens 10 according to a preferred form of the present invention. The lens 10 preferably comprises a convex-concave body bounded by a front surface or front curve 12 and a base surface or base curve 14. The lens body is preferably formed of a polymeric material such as, for example, polymerized hydroxyethylmethacrylate (HEMA), polysiloxanes, or other biocompatible transparent material(s). The lens body may or may not be tinted. The lens 10 may be configured to provide a desired degree of visual correction, or may be purely cosmetic.

The lens 10 preferably further comprises at least one light-reflective particle 16 encapsulated within the body of the lens. More preferably, a plurality of light-reflective particles 16 are dispersed and encapsulated within the body of the lens. It will be understood that the relative sizes, shapes and distribution of particles 16 depicted in the figures are for reference and understanding only, and are not intended to represent actual particle properties or be to scale. It is preferred that the particles 16 be fully encapsulated by the lens material, in order to prevent contact between a particle and the eye or eyelid of the wearer. Alternatively, however, a particle 16 may be partially encapsulated, whereby a portion of the particle lies on or adjacent the exterior surface of the lens 10. The particles 16 preferably do not extend into the visual zone 18 of the lens, which is typically at or generally proximal the center of the lens 10. Each particle 16 preferably comprises a surface area sufficient to create a "glitter" or "sparkle" effect, due to reflection of light by the particle, which effect is visually perceptible to a viewer observing the wearer of the lens 10. Satisfactory effects have been obtained by using particles 16 having a dimension (e.g., a length, width, thickness, diameter, etc.) of at least about 120 microns (0.12 mm). It is preferred that the maximum dimension of each particle 16 be no more than about 500 microns (0.5 mm), in order to minimize discomfort or sensation by the wearer. In further preferred form, particles having a length of between about 300 to about 400 microns (0.3 - 0.4 mm), a width of between about 100 to about 400 microns (0.1 - 0.4 mm), and a thickness of about 10 microns to about 20 microns (0.01 - 0.02 mm) are utilized to maximize the visual sparkle effect without significant wearer discomfort by most users. Particles 16 having light-reflective surface areas of about 0.01 mm² to about 0.25 mm² have been found to produce acceptable Visually perceptible effects. The particles 16 are preferably oriented with a light-reflective surface area generally perpendicular to the line of sight 20 of a wearer, in order to further enhance the glitter effect produced thereby.

In preferred form, the particles 16 comprise an inert, light-reflective pigment or other material. Bio-compatible, inert, crystalline pigments and materials are preferred. For example, particles 16 of the following materials may be utilized:
$ Copolyester/acrylates copolymers, such as Crystalina 321, 322, 323 and 324 iridescent glitter particles (polyester/acrylic optical core with polyester outer layer), by Meadowbrook Inventions, Inc. of Bemardsville, NJ;
$ Polyethylene terephthalate;
$ Mica with titanium dioxide and ferric ferrocyanide;
$ Mica with titanium dioxide and chromium oxide;
$ Mica with titanium dioxide and silica;
$ Polyester film;
$ Vacuum-metalized polyester film;
$ Calcium sodium borosilicate coated with titanium dioxide, such as Reflecks platelets by Englehard Corp. of Isselin, NJ;
$ Mica with iron oxide and titanium dioxide, such as Timiron⁷ MP-24 Karat Gold sparkling powder, by EM Industries, Inc. of Hawthorn, NY.

It will be recognized, of course, that the above particle materials are by way of example only, and that various other light reflective materials are applicable for use as the particles 16. A single particle type or combinations of two or more particle types may be utilized to present single-color or multi-color glitter effects. For example, in a preferred embodiment, approximately equal quantities of gold colored mica particles with iron oxide and titanium dioxide, and blue, gold, violet, green and red calcium sodium borosilicate platelets coated with titanium dioxide, are mixed together to provide a multi-colored sparkle effect.

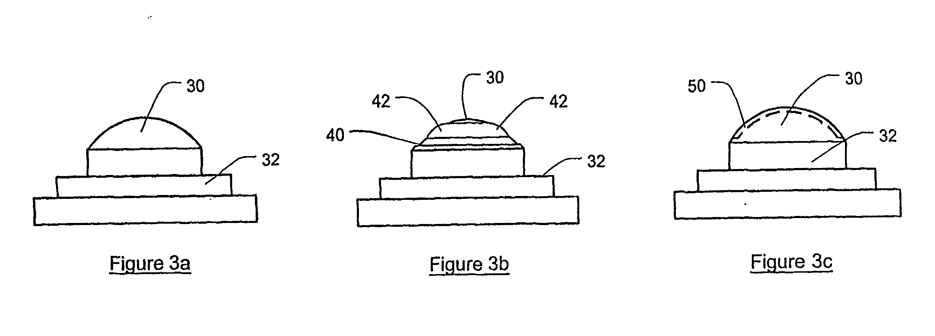

A preferred fabrication method for forming a contact lens according to the present invention will now be described with reference to Figs. 3a-3c. A molded lens button or base 30 is preferably cast and polymerized in a mold to form the base curve 14 of the lens 10. The lens base 30 is preferably decapped and remains mounted to a mold block 32, as shown in Fig. 3a. The lens base 30 is trench cut, preferably using a lathe, to remove a section of lens material (indicated by recess 40 in Fig. 3b) in the vicinity of the front curve 12.

At least one light-reflective particle 16, and more preferably a plurality of light-reflective particles, substantially as described above, are applied to the lens base 30. The light-reflective particles 16, along with a binder material, are preferably applied in an annular ring pattern 42 to the lens base 30 using a two-step cliché stamping process. The binder material is preferably uncured hydroxyethylmethacrylate (HEMA) or other uncured lens material. Alternatively, a formulated binder/solvent may be used as the binder material. In an example embodiment, the binder/solvent is a composition of approximately 66% isopropyl alcohol (IPA), 21% polyvinyl pyrrolidone (PVP), 13% hydroxyethyl methacrylate (HEMA), and 0.2% benzoin methyl ether (BME). Utilizing the same or similar materials as the binder and as the material of the lens base advantageously provides improved integrity of the final lens product. The binder material is applied from a seal cup to a cliché having the desired annular pattern, and is then transferred via a transfer pad from the cliché to the lens base 30. The particles 16 are then similarly applied to a cliché and transferred to the lens base 30 over the binder material. The pattern 42 of binder material and particles 16 is preferably in the form of a ring having an open central portion resulting in an unobstructed visual zone 18 of the final lens product.

Optionally, the particles can be segregated by size prior to application by one or more sifting operations using sieves. For example, a 106 micron (0.106 mm) sieve can be used to sift particulate pigments to collect particles for use, and to dispose of smaller particles. A substantial portion of these collected particles will have a dimension of 120 microns or more. A 500 micron sieve can then be used to remove any particles too large to be of use. The light-reflective particles 16 can be randomly or evenly distributed within the pattern 42, or can be applied in a predetermined geometric shape or other design within the pattern. The particles preferably cover no more than about 50% of the wearer's iris, and more preferably about 44% or less of the iris, in order to permit the natural eye color to show through. In alternate embodiments, coverage of greater than 50% of the iris, up to full coverage, may be provided.

A second trench cut or "shadow cut" is preferably made using a lathe to trace over the profile of the lens base 30, preferably about 20 microns (0.02 mm) to about 40 microns (0.04 mm) above the first trench cut. The shadow cut skims the surface of the pattern 42 to trim away any particles projecting too far above the lens base 30 that might otherwise protrude through the final surface of the lens and result in irritation to the wearer.

A cover layer 50 preferably is applied to the lens base 30 in a second casting step, as shown in Fig. 3c, to replace material of the lens base removed in the initial trench cutting step. The cover layer 50 is preferably of the same or similar material as the lens base 30. In this manner, the light reflective particles 16 within the pattern 42 are preferably fully encapsulated between the lens base 30 and the cover layer 50. This ensures that the particles 16 do not come into contact with the wearer's eye or eyelid during use, which might cause irritation or discomfort.

The cover layer 50 is dried and cured, and the front curve is preferably lathed and polished according to standard methods. For example, the front curve can be finished to provide a desired degree of corrective vision, or can be finished to result in a non-corrective lens that is purely cosmetic. The lens is then removed from the mold block 32, and any necessary edge polishing and/or final finishing is completed. The lenses may then be sampled for quality control purposes, and packaged and labeled according to standard methods.

While the invention has been described in its preferred forms, it will be readily apparent to those of ordinary skill in the art that many additions, modifications and deletions can be made thereto without departing from the scope of the appended claims.

## Claims

1. A contact lens comprising a body having a base surface and a front surface, said contact lens further comprising at least one light-reflective particle encapsulated within said body and having a surface area sufficient to create a visually perceptible sparkle effect; wherein the at least one light-reflective particle has a surface area having a dimension of at least 120 microns.

2. The contact lens of Claim 1, wherein said at least one light-reflective particle comprises a plurality of light-reflective particles encapsulated within said body.

3. The contact lens of Claim 1 or 2, wherein the light-reflective particles have light reflecting surface areas of from 0.01 mm² to 0.25 mm².

4. The contact lens of any one of Claims 1 to 3, wherein the light-reflective particles have a length of from 300 to 400 microns (0.3 - 0.4 mm), a width of from 100 to 400 microns (0.1-0.4 mm) and a thickness of 10 to 20 microns (0.01 - 0.02 mm).

5. The contact lens of any one of Claims 1 to 4, wherein the light-reflective particles are oriented with a light-reflective surface area perpendicular to the line of sight of a wearer.

6. The contact lens of any one of Claims 1 to 5, wherein said at least one light-reflective particle comprises a copolyester/acrylate copolymer; polyethylene terephthalate; mica with titanium dioxide and ferric ferrocyanide; mica with titanium dioxide and chromium oxide; mica with titanium dioxide and silica; polyester film; or vacuum-metalized polyester film.

7. The contact lens of Claim 1 or 2, wherein said at least one light-reflective particle comprises calcium sodium borosilicate with titanium dioxide.

8. The contact lens of Claim 1 or 2, wherein said at least one light-reflective particle comprises mica with iron oxide and titanium dioxide.

9. The contact lens of any one of Claims 1 to 3, wherein the surface area of said at least one light-reflective particle has a dimension of between 120 microns to 500 microns.

10. A method of forming a contact lens according to any one of claims 1 to 9, said method comprising:
applying at least one light-reflective particle to a lens base, wherein the at least one light-reflective particle has a surface area having a dimension of at least 120 microns sufficient to create a visually perceptible glitter effect; and
encapsulating the at least one light-reflective particle between the lens base and a layer of cover material.

11. The method of Claim 10, further comprising the step of casting the lens base in a mold prior to applying the at least one light-reflective particle.

12. The method of Claim 10 or 11, further comprising the step of cutting away a portion of the lens base prior to applying the at least one light-reflective particle.

13. The method of any one of Claims 10 to 12, wherein the step of encapsulating the at least one light-reflective particle between the lens base and a layer of cover material comprises casting the layer of cover material over the at least one light-reflective particle to replace the portion of the lens base cut away prior to applying the at least one light-reflective particle.

14. The method of any one of Claims 10 to 13, further comprising the step of lathing the layer of cover material to finish the front curve of the lens.

15. The method of any one of Claims 10 to 14, wherein the step of applying at least one light-reflective particle comprises applying a binder material to the lens base and applying at least one light-reflective particle to the binder.

16. A contact lens comprising:
a lens base;
a plurality of light-reflective particles applied to a front face of said lens base, each of said plurality of light-reflective particles having a surface with a dimension of at least about 120 microns; and
a layer of cover material overlying said plurality of light-reflective particles to thereby encapsulate said plurality of light-reflective particles between said lens base and said layer of cover material.

17. The contact lens of Claim 16, wherein said plurality of light-reflective particles are selected from the group consisting of: copolyester/acrylates copolymer; polyethylene terephthalate; mica with titanium dioxide and ferric ferrocyanide; mica with titanium dioxide and chromium oxide; mica with titanium dioxide and silica; polyester film; or vacuum-metalized polyester film.

18. The contact lens of Claim 16, wherein said plurality of light-reflective particles comprises calcium sodium borosilicate with titanium dioxide.

19. The contact lens of Claim 16, wherein said plurality of light-reflective particles comprise mica with iron oxide and titanium dioxide.

## Patentansprüche

1. Kontaktlinse, umfassend einen Körper mit einer Basisoberfläche und einer Frontoberfläche, wobei die Kontaktlinse weiterhin mindestens ein lichtreflektierendes Teilchen, das innerhalb des Körpers eingekapselt ist und eine Oberfläche aufweist, die ausreicht, um einen visuell wahrnehmbaren Funkeleffekt zu erzeugen, umfasst; wobei das mindestens eine lichtreflektierende Teilchen eine Oberfläche mit einer Abmessung von mindestens 120 Mikrometern aufweist.

2. Kontaktlinse nach Anspruch 1, wobei das mindestens eine lichtreflektierende Teilchen eine Vielzahl von lichtreflektierenden Teilchen, die innerhalb des Körpers eingekapselt sind, umfasst.

3. Kontaktlinse nach Anspruch 1 oder 2, wobei die lichtreflektierenden Teilchen lichtreflektierende Oberflächen von 0,01 mm² bis 0,25 mm² aufweisen.

4. Kontaktlinse nach einem der Ansprüche 1 bis 3, wobei die lichtreflektierenden Teilchen eine Länge von 300 bis 400 Mikrometern (0,3 - 0,4 mm), eine Breite von 100 bis 400 Mikrometern (0,1 - 0,4 mm) und eine Dicke von 10 bis 20 Mikrometern (0,01 - 0,02 mm) aufweisen.

5. Kontaktlinse nach einem der Ansprüche 1 bis 4, wobei die lichtreflektierenden Teilchen mit einer lichtreflektierenden Oberfläche senkrecht zur Sichtlinie eines Trägers orientiert sind.

6. Kontaktlinse nach einem der Ansprüche 1 bis 5, wobei das mindestens eine lichtreflektierende Teilchen ein Copolyester/Acrylat-Copolymer; Polyethylenterephthalat; Glimmer mit Titandioxid und Eisen(III)-hexacyanoferrat; Glimmer mit Titandioxid und Chromoxid; Glimmer mit Titandioxid und Siliziumdioxid; Polyesterfolie; oder vakuummetallisierte Polyesterfolie umfasst.

7. Kontaktlinse nach Anspruch 1 oder 2, wobei das mindestens eine lichtreflektierende Teilchen Calciumnatriumborosilikat mit Titandioxid umfasst.

8. Kontaktlinse nach Anspruch 1 oder 2, wobei das mindestens eine lichtreflektierende Teilchen Glimmer mit Eisenoxid und Titandioxid umfasst.

9. Kontaktlinse nach einem der Ansprüche 1 bis 3, wobei die Oberfläche des mindestens einen lichtreflektierenden Teilchens eine Abmessung zwischen 120 Mikrometern und 500 Mikrometern aufweist.

10. Verfahren zum Ausbilden einer Kontaktlinse nach einem der Ansprüche 1 bis 9, wobei das Verfahren umfasst:
Aufbringen mindestens eines lichtreflektierenden Teilchens auf eine Linsenbasis, wobei das mindestens eine lichtreflektierende Teilchen eine Oberfläche mit einer Abmessung von mindestens 120 Mikrometern aufweist, die ausreicht, um einen visuell wahrnehmbaren Glitzereffekt zu erzeugen; und
Einkapseln des mindestens einen lichtreflektierenden Teilchens zwischen der Linsenbasis und einer Schicht aus Deckmaterial.

11. Verfahren nach Anspruch 10, welches weiterhin den Schritt des Gießens der Linsenbasis in eine Form vor dem Aufbringen des mindestens einen lichtreflektierenden Teilchens umfasst.

12. Verfahren nach Anspruch 10 oder 11, welches weiterhin den Schritt des Abschneidens eines Teils der Linsenbasis vor dem Aufbringen des mindestens einen lichtreflektierenden Teilchens umfasst.

13. Verfahren nach einem der Ansprüche 10 bis 12, wobei der Schritt des Einkapselns des mindestens einen lichtreflektierenden Teilchens zwischen der Linsenbasis und einer Schicht aus Deckmaterial das Gießen der Schicht aus Deckmaterial über das mindestens eine lichtreflektierende Teilchen umfasst, um den Teil der Linsenbasis zu ersetzen, der vor dem Aufbringen des mindestens einen lichtreflektierenden Teilchens abgeschnitten wurde.

14. Verfahren nach einem der Ansprüche 10 bis 13, welches weiterhin den Schritt des Drehens der Schicht aus Deckmaterial umfasst, um die Frontkrümmung der Linse fertig zu stellen.

15. Verfahren nach einem der Ansprüche 10 bis 14, wobei der Schritt des Aufbringens mindestens eines lichtreflektierenden Teilchens das Aufbringen eines Bindematerials auf die Linsenbasis und das Aufbringen mindestens eines lichtreflektierenden Teilchens auf das Bindemittel umfasst.

16. Kontaktlinse, umfassend:
eine Linsenbasis;
eine Vielzahl von lichtreflektierenden Teilchen, die auf eine Frontfläche der Linsenbasis aufgebracht sind, wobei jedes der Vielzahl von lichtreflektierenden Teilchen eine Oberfläche mit einer Abmessung von mindestens etwa 120 Mikrometern aufweist; und
eine Schicht aus Deckmaterial, die über der Vielzahl von lichtreflektierenden Teilchen liegt, um dadurch die Vielzahl von lichtreflektierenden Teilchen zwischen der Linsenbasis und der Schicht aus Deckmaterial einzukapseln.

17. Kontaktlinse nach Anspruch 16, wobei die Vielzahl von lichtreflektierenden Teilchen aus der Gruppe ausgewählt sind, bestehend aus: Copolyester/Acrylat-Copolymer; Polyethylenterephthalat; Glimmer mit Titandioxid und Eisen(III)-hexacyanoferrat; Glimmer mit Titandioxid und Chromoxid; Glimmer mit Titandioxid und Siliziumdioxid; Polyesterfolie; oder vakuummetallisierte Polyesterfolie.

18. Kontaktlinse nach Anspruch 16, wobei die Vielzahl von lichtreflektierenden Teilchen Calciumnatriumborosilikat mit Titandioxid umfasst.

19. Kontaktlinse nach Anspruch 16, wobei die Vielzahl von lichtreflektierenden Teilchen Glimmer mit Eisenoxid und Titandioxid umfasst.

## Revendications

1. Lentille de contact comprenant un corps ayant une surface de base et une surface frontale, ladite lentille de contact comprenant, en outre, au moins une particule réfléchissante encapsulée à l'intérieur dudit corps, et ayant une surface spécifique suffisante pour créer un effet étincelant visuellement perceptible, dans laquelle au moins une particule réfléchissante a une surface spécifique ayant une dimension d'au moins 120 micromètres.

2. Lentille de contact selon la revendication 1, dans laquelle au moins ladite particule réfléchissante comprend une pluralité de particules réfléchissantes encapsulées à l'intérieur dudit corps.

3. Lentille de contact selon la revendication 1 ou 2, dans laquelle les particules réfléchissantes ont des surfaces spécifiques réfléchissantes de 0,01 mm² à 0,25 mm².

4. Lentille de contact selon l'une quelconque des revendications 1 à 3, dans laquelle les particules réfléchissantes ont une longueur de 300 à 400 micromètres (0,3 - 0,4 mm), une largeur de 100 à 400 micromètres (0,1 - 0,4 mm), et une épaisseur de 10 à 20 micromètres (0,01 - 0,02 mm).

5. Lentille de contact selon l'une quelconque des revendications 1 à 4, dans laquelle les particules réfléchissantes sont orientées avec une surface spécifique réfléchissante perpendiculaire à la ligne de vision de l'utilisateur.

6. Lentille de contact selon l'une quelconque des revendications 1 à 5, dans laquelle au moins ladite particule réfléchissante comprend un copolymère copolyester/acrylate, du téréphtalate de polyéthylène, du mica avec du dioxyde de titane et du ferrocyanure ferrique, du mica avec du dioxyde de titane et de l'oxyde de chrome, du mica avec du dioxyde de titane et de la silice, un film de polyester ou un film de polyester métallisé sous vide.

7. Lentille de contact selon la revendication 1 ou 2, dans laquelle au moins ladite particule réfléchissante comprend du borosilicate de calcium-sodium avec du dioxyde de titane.

8. Lentille de contact selon la revendication 1 ou 2, dans laquelle au moins ladite particule réfléchissante comprend du mica avec de l'oxyde de fer et du dioxyde de titane.

9. Lentille de contact selon l'une quelconque des revendications 1 à 3, dans laquelle la surface spécifique au moins de ladite particule réfléchissante a une dimension de 120 micromètres à 500 micromètres.

10. Procédé de formation d'une lentille de contact selon l'une quelconque des revendications 1 à 9, ledit procédé consistant à :
appliquer au moins une particule réfléchissante à une-base de lentille, où au moins la particule réfléchissante a une surface spécifique ayant une dimension d'au moins 120 micromètres, suffisante pour créer un effet brillant visuellement perceptible, et
encapsuler au moins ladite particule réfléchissante entre la base de lentille et une couche de matière de recouvrement.

11. Procédé selon la revendication 10, comprenant, en outre, l'étape consistant à couler la base de lentille dans un moule avant d'appliquer au moins la particule réfléchissante.

12. Procédé selon la revendication 10 ou 11, comprenant, en outre, l'étape de découpage d'une partie de la base de lentille avant l'application au moins de la particule réfléchissante.

13. Procédé selon l'une quelconque des revendications 10 à 12, dans lequel l'étape d'encapsulation au moins de la particule réfléchissante entre la base de lentille et une couche de matière de recouvrement comprend la coulée de la couche de matière de recouvrement sur au moins la particule réfléchissante pour remplacer la partie de la base de lentille découpée avant l'application au moins de la particule réfléchissante.

14. Procédé selon l'une quelconque des revendications 10 à 13, comprenant, en outre, l'étape consistant à finir à la lame la couche de matière de recouvrement pour effectuer une finition de la courbure frontale de la lentille.

15. Procédé selon l'une quelconque des revendications 10 à 14, dans lequel l'étape d'application d'au moins une particule réfléchissante comprend l'application d'une matière de liant à la base de lentille et l'application d'au moins une particule réfléchissante au liant.

16. Lentille de contact comprenant :
une lentille de base ;
une pluralité de particules réfléchissantes appliquées à une face frontale de ladite base de lentille, chacune des particules de ladite pluralité de particules réfléchissantes ayant une surface d'une dimension d'au moins environ 120 micromètres ; et
une couche de matière de recouvrement recouvrant ladite pluralité de particules réfléchissantes pour encapsuler ainsi ladite pluralité de particules réfléchissantes entre ladite base de lentille et ladite couche de matière de recouvrement.

17. Lentille de contact selon la revendication 16, dans laquelle ladite pluralité de particules réfléchissantes est choisie dans le groupe constitué par : un copolymère copolyester/acrylates, le téréphtalate de polyéthylène, le mica avec du dioxyde de titane et du ferrocyanure ferrique, le mica avec du dioxyde de titane et de l'oxyde de chrome, le mica avec du dioxyde de titane et de la silice, un film de polyester ou un film de polyester métallisé sous vide.

18. Lentille de contact selon la revendication 16, dans laquelle ladite pluralité de particules réfléchissantes comprend du borosilicate de calcium-sodium avec du dioxyde de titane.

19. Lentille de contact selon la revendication 16, dans laquelle ladite pluralité de particules réfléchissantes comprend du mica avec de l'oxyde de fer et du dioxyde de titane.
